# EUROPÄISCHE PATENTSCHRIFT

(11) **EP 3 503 863 B1**
(45) Veröffentlichungstag und Bekanntmachung des Hinweises auf die Patenterteilung: **21.04.2021**
(21) Anmeldenummer: 17762039.0
(22) Anmeldetag: 21.07.2017
(51) Int. Cl.: B29C 65/02, B65B 3/00, B65B 39/08, B65D 75/58, A61J 1/10, A61J 1/14, B29C 65/48

(54) **VORRICHTUNG ZUM VERLÄNGERN EINER FOLIE UND ZUM VERSCHWEISSEN DER FOLIE MIT EINEM EINE ACHSRICHTUNG AUFWEISENDEN ANSCHLUSSTEIL SOWIE VERFAHREN, HERSTELLVERFAHREN UND ANLAGE**
DEVICE FOR EXTENDING A FILM AND FOR WELDING THE FILM TO A CONNECTION PART HAVING AN AXIAL DIRECTION, AND METHOD, PRODUCTION METHOD AND SYSTEM
DISPOSITIF POUR ALLONGER UN FILM ET POUR SOUDER UNE FEUILLE À UN ÉLÉMENT RAPPORTÉ PRÉSENTANT UNE DIRECTION AXIALE, PROCÉDÉ, PROCÉDÉ DE FABRICATION ET INSTALLATION

(30) Priorität: 26.08.2016 DE 102016010247; 20.04.2017 DE 102017003802; 20.07.2017 DE 102017006886
(43) Veröffentlichungstag der Anmeldung: 03.07.2019
(73) Patentinhaber: Kiefel GmbH, 83395 Freilassing (DE)
(72) Erfinder: GSCHWENDTNER, Rupert, 83435 Bad Reichenhall (DE); KLEIN, Martin, 5400 Hallein (AT)
(74) Vertreter: FARAGO Patentanwälte
(86) Internationale Anmeldenummer: PCT/DE2017/000216
(87) Internationale Veröffentlichungsnummer: WO 2018/036573

(56) Entgegenhaltungen:
- US-A1- 2013 126 097

## Beschreibung

Die Erfindung betrifft eine Vorrichtung zum Verlängern einer Folie und zum Verschweißen der Folie mit einem eine Achsrichtung aufweisenden Anschlussteil sowie ein Verfahren, ein Herstellverfahren und eine Anlage.

Insbesondere betrifft die Erfindung eine Vorrichtung zum Verlängern einer Folie und zum Verschweißen der Folie mit einem eine Achsrichtung aufweisenden Anschlussteil, mit einer Verlängerungseinrichtung zum Verlängern der Folie innerhalb und/oder außerhalb eines Verbindungsbereiches der Folie, wobei die Verlängerungseinrichtung ein Verformungswerkzeug aufweist, sowie ein Verfahren zum Verschweißen eines Verbindungsbereichs einer Folie mit einem eine Achsrichtung aufweisenden Anschlussteil, ein Herstellverfahren für Beutel zur Nutzung für medizinische Zwecke mittels Verschweißen von zwei Folien mit einem eine Achsrichtung aufweisenden Anschlussteil zu einem Beutel, eine Anlage zum Produzieren von Beuteln, vor allem medizinischen Beuteln, aus zwei Folien mit einem zwischen den Folien eingeschweißten eine Achsrichtung aufweisenden Anschlussteil und einen Beutel, hergestellt aus zwei Folien und einem eine Achsrichtung aufweisenden Anschlussteil.

Es stellt sich regelmäßig die Aufgabe, eine Folie oder mehrere Folien mit einem Anschlussteil in einer gewerblichen Produktionsanlage zu verschweißen.

Ein sehr gängiges Beispiel zeigt die WO 2007/140 760 A2. Dort werden Beutel hergestellt, welche schließlich als Medizinprodukte Verwendung finden. Zum Herstellen des benötigten Ausflussteils am Beutel wird ein schlauchförmiges Anschlussteil zwischen zwei Folien eingeschweißt. Hierzu wird das schlauchförmige Anschlussteil an einer Mandrene, meist als Zentralelektrode bezeichnet, angeordnet. Die Folien werden eben oberhalb und unterhalb des Anschlussteils angeordnet. Dann fährt ein Werkzeug an die Folien heran, legt diese bei weiterem Zusammenfahren von Ober- und Unterwerkzeug flächig in einem Verbindungsbereich um das Anschlussteil herum, bis sich die Folien neben dem Verbindungsbereich aneinander anlegen. Sodann wird einerseits eine Schweißverbindung zwischen dem Anschlussteil und den Folien, andererseits außerhalb des Verbindungsbereichs zwischen den Folien direkt hergestellt.

Die WO 2010/025699 A1 offenbart eine Vorrichtung zum Verschweißen eines Verbindungsbereichs einer Folie mit einem Anschlussteil, insbesondere zweier Folien mit einem schlauchförmigen Anschlussteil, wobei in einem ersten Schritt kontrolliert eine Verlängerung der Folie außerhalb des Verbindungsbereiches hervorgerufen wird, sodass die Folie über eine Längenreserve verfügt, welche im zweiten Schritt beim Verschweißen einer unkontrollierten Schwächung der Folie im Bereich des Anschlussteils entgegenwirkt.

In der Praxis werden oft zwei oder mehr Mandrenen in einem Schweißvorgang nebeneinander angeordnet. In diesem Fall gibt es mehrere Verbindungsbereiche, nämlich jeweils zwischen den Folien und den einzelnen schlauchförmigen Anschlussteilen, während zwischen den Verbindungsbereichen die Folien unmittelbar miteinander zum Abdichten des herzustellenden Beutels verschweißt werden.

Es versteht sich, dass auch mehr als nur zwei Folien eingesetzt werden können.

Der Erfindung liegt die Aufgabe zugrunde, dem Stand der Technik eine Verbesserung oder eine Alternative zur Verfügung zu stellen.

Nach einem ersten Aspekt der Erfindung löst die Aufgabe eine Vorrichtung zum Verlängern einer Folie und zum Verschweißen der Folie mit einem eine Achsrichtung aufweisenden Anschlussteil, zum Formen eines Beutels für medizinische Zwecke, mit einer Verlängerungseinrichtung zum Verlängern der Folie innerhalb und/oder außerhalb eines Verbindungsbereiches der Folie, wobei die Verlängerungseinrichtung ein Verformungswerkzeug mit einer Erstreckungsrichtung und mit einem Verformungsquerschnitt aufweist, wobei das Verformungswerkzeug einen Bereich mit einem in Erstreckungsrichtung auslaufenden Verformungsquerschnitt aufweist, dessen Kontur sich in Erstreckungsrichtung so ändert, dass der Grad der Verformung des Verformungswerkzeugs ausläuft.

Begrifflich sei hierzu Folgendes erläutert:
Zunächst sei ausdrücklich darauf hingewiesen, dass im Rahmen der hier vorliegenden Patentanmeldung unbestimmte Artikel und Zahlenangaben wie "ein", "zwei" usw. im Regelfall als "mindestens"-Angaben zu verstehen sein sollen, also als "mindestens ein...", "mindestens zwei ..." usw., sofern sich nicht aus dem jeweiligen Kontext ausdrücklich ergibt oder es für den Fachmann offensichtlich oder technisch zwingend ist, dass dort nur "genau ein ...", "genau zwei ..." usw. gemeint sein können.

Als ein "Verlängern" der Folie sei ein mechanischer Eingriff in die molekulare Struktur der Folie verstanden, welcher der Folie eine Längenreserve zur Verfügung stellen soll, damit die ihrerseits zweidimensionale Folie ihre erforderliche zusätzliche Länge beim Umformen des dreidimensionalen Anschlussteils ohne nennenswerte Zugkräfte aus dem verlängerten Bereich holen kann, zumindest zum Teil, und somit jedenfalls nicht vollständig aus dem Verbindungsbereich selbst. Im Regelfall wird das Verlängern die Folie aus ihrer Ebene heraus auslenken.

Eine "Folie" bezeichnet insbesondere ein dünnes Kunststoffblatt, sei es als Einzelblatt oder sei es als Endlosband.

Unter "Verschweißen" wird insbesondere das unlösbare Verbinden von Bauteilen unter Anwendung von Wärme und/oder Druck mit oder ohne Schweißzusatzwerkstoffen verstanden.

Ein "Anschlussteil" bezeichnet ein Bauteil, welches mit einer Folie verschweißt wird. Insbesondere ist ein oftmals Verwendung findendes Anschlussteil ein Kunststoffröhrchen oder ein Kunststoffkörper. Durch die Verwendung eines Kunststoffröhrchens, welches naturgemäß zumindest "eine Achsrichtung aufweist", kann beispielsweise ein Beutel mit einer schlauchförmigen Öffnung hergestellt werden.

Eine "Verlängerungseinrichtung" ist eine Vorrichtung, die dazu geeignet und dazu eingerichtet ist eine Folie zumindest in einem Bereich der Folie zu verlängern.

Als "Verbindungsbereich" ist derjenige Bereich zu verstehen, in welchem die Folie mit dem Anschlussteil verbunden sein soll und nach dem Verbinden verbunden ist.

Als "außerhalb des Verbindungsbereichs" ist daher ein Bereich der Folie zu verstehen, der nicht mit dem Anschlussteil in Verschweißung gebracht sein soll oder gebracht werden soll, sondern vielmehr seitlich neben einem Anschlussteil liegen soll, beziehungsweise bei mehreren Anschlussteilen seitlich zwischen oder ganz neben den Verbindungsbereichen liegen soll.

Als "innerhalb des Verbindungsbereichs" ist dementsprechend ein Bereich zu verstehen, welcher im verschweißten Zustand Kontakt mit dem Anschlussteil haben soll.

Ein "Verformungswerkzeug" bezeichnet ein Werkzeug, welches zum Umformen einer Folie geeignet ist, insbesondere zum Verlängern einer Folie in zumindest einem Bereich der Folie.

Eine "Erstreckungsrichtung" ist die Richtung, in welcher sich etwas erstreckt. Insbesondere meint hier eine Erstreckungsrichtung eine Richtung, in welche sich das Verformungswerkzeug erstreckt, wobei die Erstreckungsrichtung diejenige Richtung meint, in der das Verformungswerkzeug nur geringförmige Änderungen in der Kontur aufweist. Insbesondere kann die Erstreckungsrichtung mit der Achsrichtung des Anschlussteils zusammen fallen, und/oder die Erstreckungsrichtung kann normal zu einer Maschinenrichtung liegen. Insbesondere kann die Erstreckungsrichtung diejenige Richtung sein, in welcher ein Verformungsquerschnitt des Verformungswerkzeugs ausläuft.

Der "Verformungsquerschnitt" ist als die Kontur des Verformungswerkzeugs in Erstreckungsrichtung des Verformungswerkzeugs zu verstehen. Die Kontur zeigt sich also im Querschnitt des Verformungswerkzeugs rechtwinklig zur Erstreckungsrichtung.

Ein "auslaufender Verformungsquerschnitt" ist ein Verformungsquerschnitt eines Verformungswerkzeugs, dessen Kontur sich in Erstreckungsrichtung so ändert, dass der Grad der Verformung des Verformungswerkzeugs ausläuft, bevorzugt so weit, dass der Verformungsquerschnitt des Verformungswerkzeugs in eine Ebene übergeht.

Der Stand der Technik sieht vor, dass eine Folie vor dem Verschweißen mit einem Anschlussteil verlängert wird. So schlägt die WO 2010/025699 A1 vor eine Folie mittels eines mechanischen Eingriffs zu verlängern, sodass der Folie im Bereich der Verbindung mit dem Anschlussteil eine Längenreserve zur Verfügung steht, sodass die ursprünglich zweidimensionale Folie ihre erforderliche zusätzliche Länge beim Umformen des dreidimensionalen Anschlussteils ohne nennenswerte Zugkräfte aus dem verlängerten Bereich holen kann. Die WO 2010/025699 A1 offenbart, dass das Verformungswerkzeug in seiner Erstreckungsrichtung eine konstante Kontur aufweist. Ein Verformungswerkzeug mit einer in seiner Erstreckungsrichtung konstanten Kontur ist auch in der US 2013/0126097 A1 offenbart.

Abweichend wird hier vorgeschlagen, dass das Verformungswerkzeug in seiner Erstreckungsrichtung einen auslaufenden Verformungsquerschnitt aufweist, also einen sanften Übergang zwischen der ursprünglich überall ebenen Folie und der verformten Folie im Verbindungsbereich ermöglicht. Die Erstreckungsrichtung am Verformungswerkzeug ist bevorzugt diejenige Richtung, in welcher sich im Betrieb der Vorrichtung, also der Maschine oder der Station, die herzustellenden Beutel erstrecken.

So kann die Folie kontrolliert verlängert werden, wobei die Folie im Verbindungsbereich eine überwiegend gleiche Längenreserve aufweist, welche an den Verbindungsbereich anschließend idealerweise nahtlos sowie weich in eine ebene Folie ausläuft.

Die Folie kann sowohl direkt innerhalb als auch außerhalb des Verbindungsbereiches geeignet zum Erhalt der notwendigen Längenreserve verformt werden.

Bei geeigneter Gestaltung ist der auslaufende Verformungsquerschnitt des Verformungswerkzeuges derart gestaltet, dass die Längenreserve der Folie im Verbindungsbereich konstant ist, wie dies auch der Stand der Technik bereits enthält, und von dort aus so in die ebene Folie ausläuft, dass die Verformung der Folie am Endprodukt nicht mehr sichtbar ist.

So ist in einer besonders vorteilhaften Ausführungsform denkbar, dass ein Beutel aus zwei Folien und einem Füllrohr hergestellt werden kann, welcher aus zwei im Verbindungsbereich verformten Folien und einem Füllrohr als Anschlussteil besteht, wobei die Verformung der Folie durch das Auslaufen in Erstreckungsrichtung des Verformungswerkzeugs derart durch die Konturierung des Verformungswerkzeugs bestimmt ist, dass die Folien von zwei Seiten ohne Falten sowie ohne weitere plastische Verformung um das Füllrohr gelegt und verschweißt werden kann, wobei die Verformung derart verläuft, dass sie am Endprodukt, also dem Beutel, keine erkennbaren Strukturen aufweist.

So ist konkret in einer besonders vorteilhafte Ausführungsform denkbar, dass die Folie so mit dem Verformungswerkzeug zusammengeführt wird, dass sie gleichzeitig mit dem in Erstreckungsrichtung konstanten Bereich des Verformungsquerschnittes und dem in Erstreckungsrichtung auslaufenden Bereich des Verformungsquerschnittes verformt wird.

Als Variante ist eine besonders vorteilhafte Ausführungsform konkret denkbar, in welcher die Folie so mit dem Verformungswerkzeug zusammengeführt wird, dass sie gleichzeitig mit einem Teilbereich des in Erstreckungsrichtung konstanten Bereich des Verformungsquerschnittes und dem in Erstreckungsrichtung auslaufenden Bereich des Verformungsquerschnittes verformt wird.

Als weitere Variante ist eine besonders vorteilhafte Ausführungsform konkret denkbar, in welcher die Folie so mit dem Verformungswerkzeug zusammengeführt wird, dass sie nur mit dem in Erstreckungsrichtung auslaufenden Bereich des Verformungsquerschnittes oder nur mit einem Teilbereich des in Erstreckungsrichtung auslaufenden Bereichs des Verformungsquerschnittes verformt wird.

Die Vorrichtung zum Verlängern der Folie und zum Verschweißen der Folie mit dem eine Achsrichtung aufweisenden Anschlussteil kann vorteilhafterweise derart gestaltet sein, dass die Folie innerhalb einer Vorrichtung verlängert und verschweißt wird.

Das Anschlussteil kann eine rohrförmige Gestalt, eine zylindrische Gestalt, eine eckige Gestalt oder abweichende Gestalt aufweisen. Das Verformungswerkzeug kann vorteilhafterweise derart angepasst sein, dass die Folie je nach Gestalt des Anschlussteiles derart umgeformt und verlängert wird, dass sie sich ohne notwendige weitere plastische Verformung um das Anschlussteil abwickeln lässt.

Vorteilhaft kann durch den hier vorgestellten Aspekt der Erfindung erreicht werden, dass die Folie zunächst kontrolliert im Verbindungsbereich verformt wird, wodurch eine Längenreserve geschaffen wird, welche es ermöglicht die Folie im Verbindungsbereich ohne weitere plastische Dehnung um das Anschlussteil abzuwickeln, wobei die Verformung durch die Konturierung des Verformungswerkzeuges derart ausläuft, dass sie am Endprodukt keine erkennbaren Verformungsspuren hinterlässt, wodurch die Wertigkeit eines solchen Produktes steigt.

Weiterhin kann vorteilhaft erreicht werden, dass die Schweißqualität durch die Vorverformung der Folie hinsichtlich der Dichtheit der Verschweißung sowie hinsichtlich einer Vermeidung einer Folienverkürzung verbessert werden kann.

Vorteilhaft kann ebenfalls erreicht werden, dass die Folie nahezu homogen verformt wird, wodurch größeren Dickenschwankungen in der Folie vermieden werden können. Durch den auslaufenden Verformungsquerschnitt des Verformungswerkzeugs kann ebenfalls vorteilhaft erreicht werden, dass nahezu keine Eigenspannungen in der verformten Folie zurückbleiben, wodurch auch die Produkteigenschaften verbessert werden können.

Bevorzugt ist die Verlängerungseinrichtung so in einem Werkzeugdurchlauf angeordnet, dass sie das Verlängern der Folie zeitlich vor dem Verschweißen bewirken kann.

Begrifflich sei hierzu Folgendes erläutert:
Ein "Werkzeugdurchlauf" bezeichnet einen Durchlauf mindestens eines Halbzeugs durch eine Mehrzahl an Werkzeugen in einer Anlage zum Herstellen eines Produktes oder Zwischenproduktes, somit den Durchlauf durch mehrere Stationen. Insbesondere ist hier unter einem Werkzeugdurchlauf die Reihenfolge zu verstehen, in welcher eine Folie eine Mehrzahl von Werkzeugen durchläuft. So kann die Folie in einem Werkzeugdurchlauf zuerst eine Verlängerungseinrichtung durchlaufen, in welcher die Folie zumindest in einem Bereich der Folie verlängert wird, bevor sie anschließend mit einem Schweißwerkzeug mit einem Anschlussteil verschweißt wird.

Bei einer solchen Gestaltung nimmt zunächst die Verlängerungseinrichtung das Verlängern der Folie außerhalb des designierten Verlängerungsbereichs vor. Erst anschließend wird die Folie mit ihrem Verbindungsbereich um das Anschlussteil herum gelegt, also beispielsweise vom Schweißwerkzeug mit den Werkzeugflanken um das Anschlussteil herum gepresst. Die Folie zieht während des Vorgangs des Herumlegens um das Anschlussteil den im Vorfeld verlängerten Bereich von seitlich des Verbindungsbereichs nach.

Vorteilhaft kann hierdurch erreicht werden, dass ein effizienter Produktionsablauf mit einer hohen Produktionsgeschwindigkeit sowie geringen Produktionskosten realisiert werden kann.

Weiterhin kann sich vorteilhaft ergeben, dass sich der Bereich der verlängerten Folie nach dem Verlängern etwas abkühlen kann, bevor er mit dem Anschlussteil verschweißt wird, wodurch die Robustheit des Prozesses auch derart verbessert werden kann, dass weniger Ausschuss produziert wird.

Optional ist das Verformungswerkzeug dazu eingerichtet, in einem Bereich des Verformungswerkzeugs eine Wellenform in der Folie zu erzeugen.

Begrifflich sei hierzu Folgendes erläutert:
Eine "Wellenform" ist ein möglicher Verlauf einer Kontur eines Verformungsquerschnitts. Insbesondere kann eine Wellenform periodisch oder aperiodisch verlaufen. Hier ist unter einer Wellenform sowohl ein harmonischer wie ein disharmonischer Verlauf zu verstehen.

Eine Wellenform hat die Wirkung, dass die Folie mindestens zu einer Seite aus ihrer ursprünglichen Ebene heraus geformt wird, infolge weicherer Übergänge jedoch keinen Knick oder nur wenige Knicke erleidet. Außerdem können Wellenformen relativ einfach in ihrer Länge, in der Anzahl der Wellen oder der Amplitude definiert und das entsprechende Werkzeug hergestellt werden.

Eine Wellenform kann nach der obigen Definition auch einen Zick-Zack-Verlauf eine trapezförmige Auslenkung aus der Folienebene oder eine rechteckige Auslenkung aus der Folienebene beschreiben.

Vorteilhaft kann hierdurch erreicht werden, dass vergleichsweise sowie auf die Geometrie bezogen einfache Verformungswerkzeuge hergestellt und eingesetzt werden können.

Weiterhin ergibt sich vorteilhaft, dass das Verformungswerkzeug optimal auf die Kontur des Anschlussteils angepasst werden kann, sodass sich eine hohe Schweißqualität hinsichtlich Dichtheit der Schweißung ergeben kann.

Bevorzugt ist das Verformungswerkzeug dazu eingerichtet, die Wellenform in einer Sinusform zu erzeugen.

Begrifflich sei hierzu Folgendes erläutert:
Eine "Sinusform" ist als ein sinusförmiger Verlauf einer Kontur eines Verformungsquerschnitts zu verstehen.

So kann das Verformungswerkzeug dazu eingerichtet sein, die Wellenform in der Folie in einer Sinusform im Schnitt zu erzeugen.

Vorteilhaft kann hierdurch erreicht werden, dass die Verformung der Folie eine harmonische Kontur einnehmen kann, wodurch sich ein besonders wünschenswertes Foliendickenprofil der verformten Folie ergeben kann, insbesondere mit einer konstanten Foliendicke im Bereich der Verformung und/oder mit möglichst nur geringfügigen Dickenschwankungen.

Optional ist das Verformungswerkzeug dazu eingerichtet, einen symmetrischen Verformungsquerschnitt zu erzeugen.

Begrifflich sei hierzu Folgendes erläutert:
Ein "symmetrischer Verformungsquerschnitt" ist als ein Verformungsquerschnitt zu verstehen, welcher in zumindest einer Ebene der Verformung deren Richtung ihres Normalenvektors mit der Erstreckungsrichtung des Verformungswerkzeuges zusammenfällt, eine Symmetrieachse aufweist.

So ist konkret unter anderem denkbar, dass eine symmetrische Gestaltung des Verformungsquerschnitts erreicht wird.

Vorteilhaft kann hierdurch erreicht werden, dass die symmetrische Gestaltung des Verformungsquerschnitts ideal mit einem entsprechend symmetrisch gestalteten Anschlussteil korrespondiert. Dies kann zu einem idealen Verschweißungsbild mit hoher Verschweißungsqualität führen.

Bevorzugt ist das Verformungswerkzeug dazu eingerichtet, einen asymmetrischen Verformungsquerschnitt zu erzeugen.

Begrifflich sei hierzu Folgendes erläutert:
Ein "asymmetrischer Verformungsquerschnitt" ist als ein Verformungsquerschnitt zu verstehen, welcher in zumindest einer Ebene der Verformung deren Richtung ihres Normalenvektors mit der Erstreckungsrichtung des Verformungswerkzeuges zusammenfällt, keine Symmetrieachse aufweist.

So ist konkret unter anderem denkbar, dass eine asymmetrische Gestaltung des Verformungsquerschnitts erreicht wird.

Vorteilhaft kann hierdurch erreicht werden, dass die asymmetrische Gestaltung des Verformungsquerschnitts ideal mit einem entsprechend asymmetrisch gestalteten Anschlussteil korrespondiert. Dies kann zu einem idealen Verschweißungsbild mit hoher Verschweißungsqualität führen.

In einer besonderes vorteilhaften Ausführungsform ist konkret unter anderem denkbar, dass sich eine asymmetrische Verformung dadurch auszeichnet, dass die erste Folie und die zweite Folie abweichende Verformungsquerschnitte aufweisen und/oder mit abweichenden Verformungswerkzeugen verformt werden, welche abweichende Verformungsquerschnitte aufweisen.

In einer besonderes bevorzugten Ausführungsform weisen die erste Folie und die zweite Folie ein abweichendes Material auf. So ist konkret unter anderem denkbar, dass die erste Folie ein kunststoffbeschichtetes Aluminium aufweist und die zweite Folie ein Polyethylen aufweist, sodass die erste Folie und die zweite Folie ein abweichendes Materialverhalten aufweisen, insbesondere ein abweichendes Dehnverhalten. Mit abweichenden Verformungsquerschnitten lässt sich das abweichende Materialverhalten so nutzbar machen, dass sich ein angepasster idealer Verformungsquerschnitt erreichen lässt, welcher insbesondere zu einem optimalen Ergebnis beim Verschweißen mit dem Anschlussteil führen kann.

Eine besonderes bevorzugte Ausführungsform ergibt sich auch für ein Anschlussteil, welches nicht symmetrisch zur Trennebene des Beutels gestaltet ist. So lässt sich mit dem hier vorgestellten Aspekt der Erfindung erreichen, dass die Vorverformung so an die Gestalt des Einsetzteils angepasst wird, dass sich ein angepasster idealer Verformungsquerschnitt erreichen lässt, welcher insbesondere zu einem optimalen Ergebnis beim Verschweißen mit dem Anschlussteil führen kann.

Vorteilhaft kann durch den hier vorgestellten Aspekt der Erfindung erreicht werden, dass der Verformungsquerschnitt so angepasst werden kann, dass ein abweichendes Materialverhalten zwischen der ersten und der zweiten Folie und/oder eine asymmetrische Gestaltung eines Anschlussteils durch einen abweichenden Verformungsquerschnitt kompensiert werden kann und sich ein optimiertes Schweißergebnis im Bereich des Anschlussteils erreichen lässt.

Optional ist das Verformungswerkzeug in einem Bereich des Verformungswerkzeugs dazu eingerichtet, eine Längenreserve in der Folie zu erzeugen, welche zwischen zwei fixierten Punkten der Folie mindestens eine halbe Abwicklung des Verbindungsbereichs beträgt, insbesondere die vollständige Abwicklung des Verbindungsbereichs.

Begrifflich sei hierzu Folgendes erläutert:
Eine "Längenreserve" bezeichnet in einem verlängerten Bereich einer Folie die durch das dortige Wirksamwerden der Verlängerung zusätzlich entstandene Länge gegenüber dem vorherigen Zustand. Da eine Verlängerung oftmals nur einen Bereich einer Folie betrifft entsteht gegenüber dem benachbarten Bereich eine Längenreserve.

Eine "Abwicklung" einer Fläche ist als die Ausbreitung einer Fläche in eine Ebene zu verstehen, sodass die auf der Originalfläche gemessene Länge erhalten bleibt.

So kann die durch das Verlängern der Folie erreichte Längenreserve derart gestaltet sein, dass sie direkt um das Anschlussteil gelegt oder geführt werden kann, insbesondere ohne weitere plastische Dehnung der Folie.

Vorteilhaft kann durch den hier vorgestellten Aspekt der Erfindung erreicht werden, dass die Folie zunächst kontrolliert im Verbindungsbereich verformt wird, wodurch eine Längenreserve geschaffen wird, welche es ermöglicht die Folie im Verbindungsbereich ohne weitere plastische Dehnung um das Anschlussteil abzuwickeln, wobei die Verformung durch die Konturierung des Verformungswerkzeuges derart ausläuft, dass sie am Endprodukt keine erkennbaren Verformungsspuren hinterlässt, wodurch die Wertigkeit eines solchen Produktes steigt.

Weiterhin kann vorteilhaft erreicht werden, dass die Schweißqualität durch die Vorverformung der Folie hinsichtlich der Dichtheit der Verschweißung sowie hinsichtlich einer Vermeidung einer Folienverkürzung verbessert werden kann.

Vorteilhaft kann ebenfalls erreicht werden, dass die Folie nahezu homogen verformt wird, wodurch größeren Dickenschwankungen in der Folie vermieden werden können.

Bevorzugt weist die Verlängerungseinrichtung eine Folienheizung auf.

Begrifflich sei hierzu Folgendes erläutert:
Eine "Folienheizung" ist eine Vorrichtung zum Beheizen einer Folie, insbesondere ein Element zum Übertragen von Wärmeenergie auf eine Folie.

So kann die Verlängerungseinrichtung und/oder die Folie direkt kontinuierlich oder diskontinuierlich durch eine Folienheizung temperiert werden.

Vorteilhaft kann hierdurch erreicht werden, dass die Folie im Bereich der zu erzeugenden Verlängerung temperiert wird, so dass die Folie besser fließen kann und mit einem geringeren mechanischen Druck verlängert werden kann.

Vorteilhaft ergibt sich dadurch, dass die Folie homogener verformt werden kann, sie geringere Dickenschwankungen aufweisen kann und die Folie auch im Verformungsbereich nach dem Verformen eine möglichst konstante Dicke aufweisen kann.

Weiterhin kann vorteilhaft erreicht werden, dass die Schweißqualität durch die Vorverformung der Folie hinsichtlich der Dichtheit der Verschweißung sowie hinsichtlich einer Vermeidung einer Folienverkürzung verbessert werden kann.

Optional weist die Verlängerungseinrichtung ein beheiztes Verformungswerkzeug auf.

Begrifflich sei hierzu Folgendes erläutert:
Ein "beheiztes Verformungswerkzeug" ist als ein Verformungswerkzeug zu verstehen, welches ein Heizelement aufweist und von außen mit Energie versorgt wird.

So kann das Verformungswerkzeug kontinuierlich oder diskontinuierlich durch ein Heizelement im inneren oder an einer Seite des Verformungswerkzeugs temperiert werden.

Vorteilhaft kann hierdurch erreicht werden, dass die Folie im Bereich der zu erzeugenden Verlängerung durch den Kontakt mit dem Verformungswerkzeug und durch die von dem Verformungswerkzeug ausgehende Wärmestrahlung temperiert wird, so dass die Folie besser fließen kann und mit einem geringeren mechanischen Druck verlängert werden kann.

Vorteilhaft ergibt sich dadurch, dass die Folie homogener verformt werden kann, sie geringere Dickenschwankungen aufweisen kann und die Folie auch im Verformungsbereich nach dem Verformen eine möglichst konstante Dicke aufweisen kann.

Weiterhin kann vorteilhaft erreicht werden, dass die Schweißqualität durch die Vorverformung der Folie hinsichtlich der Dichtheit der Verschweißung sowie hinsichtlich einer Vermeidung einer Folienverkürzung verbessert werden kann.

Bevorzugt weist die Verlängerungseinrichtung eine Strahlenheizung auf.

Begrifflich sei hierzu Folgendes erläutert:
Eine "Strahlenheizung" verwendet insbesondere Wärmestrahlung zur Beheizung eines Bauteils, insbesondere einer Folie. Insbesondere versteht sich hier unter einer Strahlenheizung ein Wärmestrahler, dessen Strahlung zumindest einen Teil der Folie in der Verlängerungseinrichtung erreicht.

So kann die und/oder die Folie direkt kontinuierlich oder diskontinuierlich durch eine Strahlenheizung temperiert werden.

Vorteilhaft kann hierdurch erreicht werden, dass die Folie im Bereich der zu erzeugenden Verlängerung durch den Kontakt mit dem Verformungswerkzeug und durch die von dem Verformungswerkzeug ausgehende Wärmestrahlung und/oder durch die von der Strahlenheizung ausgehende Wärmestrahlung temperiert wird, so dass die Folie besser fließen kann und mit einem geringeren mechanischen Druck verlängert werden kann.

Vorteilhaft ergibt sich dadurch, dass die Folie homogener verformt werden kann, sie geringere Dickenschwankungen aufweisen kann und die Folie auch im Verformungsbereich nach dem Verformen eine möglichst konstante Dicke aufweisen kann.

Weiterhin kann vorteilhaft erreicht werden, dass die Schweißqualität durch die Vorverformung der Folie hinsichtlich der Dichtheit der Verschweißung sowie hinsichtlich einer Vermeidung einer Folienverkürzung verbessert werden kann.

Optional weist die Vorrichtung eine Transporteinrichtung für ein Endlosfolienband und/oder einen Drehtisch auf.

Begrifflich sei hierzu Folgendes erläutert:
Eine "Transporteinrichtung" ist eine Einrichtung zum Transportieren einer Folie zwischen zwei Punkten oder zum kontinuierlichen oder diskontinuierlichen Transport eines Endlosfolienbandes.

Ein "Endlosfolienband" ist ein Folienband mit einer Länge die deutlich größer ist als die Breit des Folienbandes, insbesondere ist die Länge des Folienbandes mindestens fünf Mal so lang wie die Breite des Folienbandes.

Ein "Drehtisch" ist ein Tisch, welcher dazu eingerichtet ist, eine Drehbewegung durchführen zu können.

So kann in einer geeigneten Ausführungsform der Erfindung ein Endlosfolienband durch die Vorrichtung transportiert und verarbeitet werden.

Ein Drehtisch kann dazu eingesetzt werden, den benötigten Bauraum für die Vorrichtung zu reduzieren und/oder die Anzahl der notwendigen zugeführten Endlosfolienbänder zu reduzieren.

Vorteilhaft kann hierdurch erreicht werden, dass ein effizienter Produktionsablauf mit einer hohen Produktionsgeschwindigkeit sowie geringen Produktionskosten realisiert werden kann.

Bevorzugt sind die Verlängerungseinrichtung und eine Schweißeinrichtung an einer Station angeordnet.

Begrifflich sei hierzu Folgendes erläutert:
Eine "Schweißeinrichtung" ist eine Vorrichtung, welche zum Verschweißen einer Folie eingerichtet ist, insbesondere zum Verschweißen einer Folie mit einem Anschlussteil.

Eine "Station" ist ein räumlich zusammengehörender Bereich einer Anlage, insbesondere einer Anlage, welche eine Mehrzahl von Stationen aufweist. An einer Station werden mehrere Arbeitsschritte durchgeführt, insbesondere ohne dabei die Folie zwischen den Arbeitsschritten weiter zu transportieren.

So kann die Anordnung der Verlängerungseinrichtung zu einer ohnehin vorhandenen Schweißeinrichtung an einer Station erfolgen.

Vorteilhaft kann hierdurch erreicht werden, dass eine räumlich kompaktere Anlage ermöglicht werden kann, wodurch auch die Durchlaufzeiten durch die Anlage herabgesetzt werden können.

Optional sind die Verlängerungseinrichtung und die Schweißeinrichtung an einem kombinierten Werkzeug angeordnet.

Begrifflich sei hierzu Folgendes erläutert:
Ein "kombiniertes Werkzeug" ist als ein Werkzeug zu verstehen, mit dem kombiniert mehrere Arbeitsschritte durchgeführt werden können, insbesondere können die Arbeitsschritte hintereinander durchgeführt werden.

Vorteilhaft kann hierdurch erreicht werden, dass beide Arbeitsschritte mit einem Werkzeug durchgeführt werden können, wodurch die Anlage kompakter bauen kann, sich die Umrüstzeiten reduzieren können und ein effizienterer Produktionsablauf mit einer hohen Produktionsgeschwindigkeit sowie geringen Produktionskosten realisiert werden kann.

Alternativ sind die Verlängerungseinrichtung und die Schweißeinrichtung an separaten Stationen angeordnet.

Vorteilhaft kann hierdurch erreicht werden, dass die Durchlaufzeiten durch die Anlage reduziert werden können, wodurch mehr Produkte in der gleichen Zeit hergestellt werden können und die Produktionskosten gesenkt werden können.

Optional ist die Verlängerungseinrichtung so angeordnet, dass sie ein Verlängern der Folie zwischen zwei Verbindungsbereichen bewirkt.

So ist beispielsweise in einer vorteilhaften Ausführungsform dieser Erfindung denkbar, dass eine Folie mit zwei Anschlussteilen verschweißt wird und die dafür benötigte Längenreserve der Folie durch ein Verlängern der Folie zwischen den zwei Verbindungsbereichen bewirkt wird.

Vorteilhaft kann hierdurch erreicht werden, dass ein effizienter Produktionsablauf mit einer hohen Produktionsgeschwindigkeit sowie geringen Produktionskosten realisiert werden kann.

Nach einem zweiten Aspekt der Erfindung löst die Aufgabe ein Verfahren zum Verschweißen eines Verbindungsbereichs einer Folie mit einem eine Achsrichtung aufweisenden Anschlussteil mit einer Vorrichtung nach dem ersten Aspekt der Erfindung, wobei die Folie zunächst verlängert wird und anschließend der Verbindungsbereich mit einem eine Achsrichtung aufweisenden Anschlussteil verschweißt wird.

Es versteht sich, dass sich die Vorteile einer Vorrichtung zum Verlängern einer Folie und zum Verschweißen der Folie mit einem eine Achsrichtung aufweisenden Anschlussteil, mit einer Verlängerungseinrichtung zum Verlängern der Folie innerhalb und/oder außerhalb eines Verbindungsbereiches der Folie, wobei die Verlängerungseinrichtung ein Verformungswerkzeug aufweist, wobei das Verformungswerkzeug in einer Erstreckungsrichtung des Verformungswerkzeugs einen Bereich mit einem in Erstreckungsrichtung auslaufenden Verformungsquerschnitt des Verformungswerkzeugs aufweist, wie vorstehend beschrieben unmittelbar auf ein Verfahren zum Verschweißen eines Verbindungsbereichs einer Folie mit einem eine Achsrichtung aufweisenden Anschlussteil mit eben dieser Vorrichtung, wobei die Folie zunächst verlängert wird und anschließend der Verbindungsbereich mit einem eine Achsrichtung aufweisenden Anschlussteil verschweißt wird, erstrecken.

Es sei ausdrücklich darauf hingewiesen, dass der Gegenstand des zweiten Aspekts mit dem Gegenstand des ersten Aspekts der Erfindung vorteilhaft kombinierbar ist.

Nach einem dritten Aspekt der Erfindung löst die Aufgabe ein Herstellverfahren für Beutel zur Nutzung für medizinische Zwecke mittels Verschweißen von zwei Folien mit einem eine Achsrichtung aufweisenden Anschlussteil zu einem Beutel, wobei das eine Achsrichtung aufweisende Anschlussteil in einem Verbindungsbereich zwischen die Folien verschweißt wird, wobei das Verfahren durch folgende Schritte gekennzeichnet ist:
(a) Verformen einer ersten Folie mit einem Verformungswerkzeug innerhalb und/oder außerhalb des Verbindungsbereichs, insbesondere mit einer Vorrichtung nach dem ersten Aspekt der Erfindung, wobei das Verformungswerkzeug einen ersten Verformungsquerschnitt aufweist,
(b) Verformen einer zweiten Folie mit einem Verformungswerkzeug innerhalb und/oder außerhalb des Verbindungsbereichs, insbesondere mit einer Vorrichtung nach dem ersten Aspekt der Erfindung, wobei das Verformungswerkzeug einen zweiten Verformungsquerschnitt aufweist, wobei der zweite Verformungsquerschnitt von dem ersten Verformungsquerschnitt abweicht, womit ein abweichendes Materialverhalten zwischen den zwei Folien und/oder eine asymmetrische Gestaltung des Anschlussteils durch die abweichenden Verformungsquerschnitte kompensiert wird, und
(c) Verschweißen der ersten Folie, der zweiten Folie und des eine Achsrichtung aufweisenden Anschlussteils zu einem Beutel.

Der Stand der Technik sah bislang vor, dass die zum Verschweißen eines Beutels verwendeten Folien nicht vorverformt wurden oder unmittelbar mit dem Schweißwerkzeug verformt wurden oder mit einem zur Beuteltrennebene symmetrischen Verformungsquerschnitt vorverformt wurden.

Abweichend wird hier vorgeschlagen, dass die zum Verschweißen eines Beutels verwendeten Folien mit einem zur Beuteltrennebene asymmetrischen Verformungsquerschnitt vorverformt werden. Mit anderen Worten ausgedrückt wird vorgeschlagen, dass die Folien mit einem voneinander abweichenden Verformungsquerschnitt verformt werden.

So ist konkret unter anderem denkbar, dass die erste Folie und die zweite Folie abweichende Verformungsquerschnitte aufweisen und/oder mit abweichenden Verformungswerkzeugen verformt werden, welche abweichende Verformungsquerschnitte aufweisen. In einer besonderes bevorzugten Ausführungsform weisen die erste Folie und die zweite Folie ein abweichendes Material auf. So ist konkret unter anderem denkbar, dass die erste Folie ein kunststoffbeschichtetes Aluminium aufweist und die zweite Folie ein Polyethylen aufweist, sodass die erste Folie und die zweite Folie ein abweichendes Materialverhalten aufweisen, insbesondere ein abweichendes Dehnverhalten. Mit abweichenden Verformungsquerschnitten lässt sich das abweichende Materialverhalten so nutzbar machen, dass sich ein angepasster idealer Verformungsquerschnitt erreichen lässt, welcher insbesondere zu einem optimalen Ergebnis beim Verschweißen mit dem Anschlussteil führen kann.

Eine besonderes bevorzugte Ausführungsform ergibt sich auch für ein Anschlussteil, welches nicht symmetrisch zur Trennebene des Beutels gestaltet ist. So lässt sich mit dem hier vorgestellten Aspekt der Erfindung erreichen, dass die Vorverformung so an die Gestalt des Einsetzteils angepasst wird, dass sich ein angepasster idealer Verformungsquerschnitt erreichen lässt, welcher insbesondere zu einem optimalen Ergebnis beim Verschweißen mit dem Anschlussteil führen kann.

Durch den hier vorgestellten Aspekt der Erfindung wird erreicht, dass der Verformungsquerschnitt so angepasst wird, dass ein abweichendes Materialverhalten zwischen der ersten und der zweiten Folie und/oder eine asymmetrische Gestaltung eines Anschlussteils durch einen abweichenden Verformungsquerschnitt kompensiert werden kann und sich ein optimiertes Schweißergebnis im Bereich des Anschlussteils erreichen lässt.

Es sei ausdrücklich darauf hingewiesen, dass der Gegenstand des dritten Aspekts mit dem Gegenstand der vorstehenden Aspekte der Erfindung vorteilhaft kombinierbar ist, und zwar sowohl einzeln oder in beliebiger Kombination kumulativ.

Nach einem vierten Aspekt der Erfindung löst die Aufgabe ein Herstellverfahren für Beutel zur Nutzung für medizinische Zwecke unter Verwendung einer Vorrichtung nach dem ersten Aspekt der Erfindung, zum Reduzieren einer Quereinschnürung des Beutels in gefülltem Zustand.

Begrifflich sei hierzu Folgendes erläutert:
Unter "Quereinschnürung" des gefüllten Beutels wird die sich beim Befüllen des Beutels einstellende Einschnürung der seitlichen Beutelkanten verstanden. Der Beutel wird überwiegend von einer oberen Schweißnaht, einer rechten Schweißnaht, einer linken Schweißnaht und einer unteren Schweißnaht begrenzt, welche die erste Folie und die zweite Folie umlaufend miteinander zu einem Beutel verschweißen. Insbesondere weist die obere Schweißnaht ein Anschlussstück zum Befüllen und Entleeren des Beutels auf. Beim Befüllen des Beutels gelangt ein Medium, insbesondere durch das Anschlussstück, in den Beutel, welches ein Volumen benötigt, wobei dieses Volumen vom Beutel bereitgestellt wird. Dazu verdrängt das in den Beutel eindringende Medium die erste und die zweite Folie zwischen den umlaufenden Schweißnähten, sodass sich der Abstand zwischen der ersten und der zweiten Folie innerhalb der umrandenden Schweißnähte erhöht. Ein Erhöhen des Abstands zwischen der ersten und der zweiten Folie erfordert aus Gründen der Materialkontinuität, dass die umrandenden Kanten des Beutels gleichzeitig nach innen gezogen werden. Die Geometrie der umlaufenden Schweißnähte bedingt, dass die Ecken gegenüber diesem durch das Befüllen des Beutels aufgebauten Zug der Folien im Vergleich zu den Kanten des Beutels ein steiferes Verhalten aufweisen. Durch dieses steifere Materialverhalten der Beutelecken kommt es zu einer Einschnürung der seitlichen Beutelkanten gegenüber den Ecken des Beutels. Eine Begleiterscheinung dieser Einschnürung sind oftmals entstehende Falten in der ersten und der zweiten Folie, die sich von den Beutelecken in Richtung des Zentrums des Beutels erstrecken können.

Der Stand der Technik sah bislang vor, dass eine ebene erste Folie und eine ebene zweite Folie von rechteckig oder quadratisch umlaufenden Schweißnähten zu einem Beutel verschweißt wurden. Eine Verformung der weitestgehend ebenen ersten Folie und der weitgehenden ebenen zweiten Folie ist im Stand der Technik nur im Bereich des Anschlussstückes bekannt, wobei dieser Verformungsbereich Effekten im Zusammenhang mit dem Anschlussstück entgegenwirken sollen. So kommt es im Stand der Technik zu einem Einschnüren der Beutelkanten beim Befüllen des Beutels.

Abweichend wird hier vorgeschlagen, dass sich der Verformungsbereich ausgehend vom Bereich des Anschlussstückes weiter erstreckt und dabei auch Bereiche der ersten und zweiten Folie verformt werden, die bei dem bereits verschweißten Beutel weiter im Zentrum des Beutels liegen, wodurch eine Quereinschnürung des Beutels in gefülltem Zustand verhindert oder zumindest in ihrem Ausmaß reduziert wird.

Vorteilhaft kann durch den hier vorgestellten Aspekt der Erfindung erreicht werden, dass der Beutel beim Verformen weniger einschnürt. Insbesondere kann erreicht werden, dass sich der Beutel weniger verjüngt. Dadurch können sich die beim Befüllen des Beutels sonst ergebenden Eigenspannungen verhindert oder zumindest reduziert werden, wodurch die auf das Material des befüllten Beutels wirkenden Belastungen gesenkt werden können. Insbesondere kann ebenfalls erreicht werden, dass die auf die Schweißnähte des Beutels wirkenden Belastungen reduziert werden können, sodass die Breite der Scheißnähte durch den hier vorgestellten Aspekt der Erfindung reduziert werden kann. Dadurch können ästhetischere Beutel hergestellt werden, welche gleichermaßen weniger Material benötigen, wobei auch durch die Reduktion der Belastungen in der Folie des Beutels erreicht werden kann, dass die Foliendicke des Beutels reduziert werden kann.

Es sei ausdrücklich darauf hingewiesen, dass der Gegenstand des vierten Aspekts mit dem Gegenstand der vorstehenden Aspekte der Erfindung vorteilhaft kombinierbar ist, und zwar sowohl einzeln oder in beliebiger Kombination kumulativ.

Nach einem fünften Aspekt der Erfindung löst die Aufgabe eine Anlage zum Produzieren von Beuteln aus zwei Folien mit einem zwischen den Folien eingeschweißten eine Achsrichtung aufweisenden Anschlussteil, wobei die Anlage eine Vorrichtung, also Maschine oder Station, nach dem ersten Aspekt der Erfindung aufweist und/oder ein Verfahren nach dem zweiten Aspekt der Erfindung und/oder ein Herstellverfahren nach dem dritten Aspekt oder dem vierten Aspekt der Erfindung durchführt.

Begrifflich sei hierzu Folgendes erläutert:
Ein Beutel ist ein hohler, dünnwandiger, leicht verformbarer Gegenstand, der zur Aufnahme von anderen Gegenständen geeignet ist, insbesondere ist er zur Aufnahme von Flüssigkeiten geeignet. Er kann insbesondere befüllt und entleert werden.

Es versteht sich, dass sich die Vorteile einer Vorrichtung zum Verlängern einer Folie und zum Verschweißen der Folie mit einem eine Achsrichtung aufweisenden Anschlussteil, mit einer Verlängerungseinrichtung zum Verlängern der Folie innerhalb und/oder außerhalb eines Verbindungsbereiches der Folie, wobei die Verlängerungseinrichtung ein Verformungswerkzeug aufweist, wobei das Verformungswerkzeug in einer Erstreckungsrichtung des Verformungswerkzeugs einen Bereich mit einem in Erstreckungsrichtung auslaufenden Verformungsquerschnitt des Verformungswerkzeugs aufweist, und/oder die Vorteile eines Verfahrens zum Verschweißen eines Verbindungsbereichs einer Folie mit einem eine Achsrichtung aufweisenden Anschlussteil mit einer Vorrichtung nach dem ersten Aspekt der Erfindung, wobei die Folie zunächst verlängert wird und anschließend der Verbindungsbereich mit einem eine Achsrichtung aufweisenden Anschlussteil verschweißt wird, und/oder die Vorteile eines Herstellverfahrens für Beutel zur Nutzung für medizinische Zwecke mittels Verschweißen von zwei Folien mit einem eine Achsrichtung aufweisenden Anschlussteil zu einem Beutel nach einem dritten Aspekt der Erfindung, wie vorstehend beschrieben unmittelbar auf eine Anlage zum Produzieren von Beuteln aus zwei Folien mit einem zwischen den Folien eingeschweißten eine Achsrichtung aufweisenden Anschlussteil, wobei die Anlage eben diese Vorrichtung aufweist, erstrecken.

Es sei ausdrücklich darauf hingewiesen, dass der Gegenstand des fünften Aspekts mit dem Gegenstand der vorstehenden Aspekte der Erfindung vorteilhaft kombinierbar ist, und zwar sowohl einzeln oder in beliebiger Kombination kumulativ.

Es versteht sich, dass sich die Vorteile einer Vorrichtung nach dem ersten Aspekt der Erfindung und/oder eines Verfahrens nach dem zweiten Aspekt der Erfindung und/oder eines Herstellverfahrens nach dem dritten Aspekt der Erfindung und/oder einer Anlage nach dem vierten Aspekt der Erfindung, wie vorstehend beschrieben unmittelbar auf einen Beutel, hergestellt aus zwei Folien und einem eine Achsrichtung aufweisenden Anschlussteil mittels einer Vorrichtung nach dem ersten Aspekt der Erfindung und/oder eines Verfahrens nach dem zweiten Aspekt der Erfindung und/oder eines Herstellverfahrens nach dem dritten Aspekt der Erfindung und/oder mit einer Anlage nach dem vierten Aspekt der Erfindung, erstrecken.

Weitere Anregungen bezüglich der Ausführung dieser Erfindung können auch der WO 2010/025699 A1 der gleichen Anmelderin entnommen werden, welche einen vergleichbaren Hintergrund aufweist, jedoch kein Verformungswerkzeug offenbart, welches in einer Erstreckungsrichtung des Verformungswerkzeugs einen Bereich mit einem in Erstreckungsrichtung auslaufenden Verformungsquerschnitt des Verformungswerkzeugs aufweist.

Nachstehend wird die Erfindung anhand eines Ausführungsbeispiels unter Bezugnahme auf die Zeichnung näher erläutert. Dort zeigt
- Fig. 1: schematisch ein Verformungswerkzeug mit symmetrischem Verformungsquerschnitt,
- Fig. 2: schematisch ein Verformungswerkzeug mit asymmetrischem Verformungsquerschnitt,
- Fig. 3: schematisch einen Beutel für medizinische Zwecke mit zwei Anschlussstücken, und
- Fig. 4: schematisch einen Beutel für medizinische Zwecke mit einem Anschlussstück.

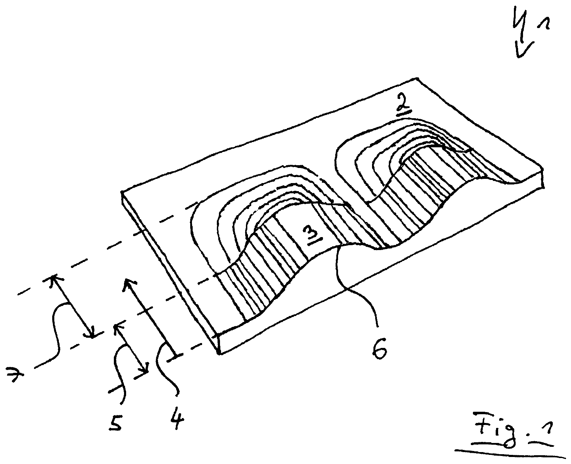

Das Verformungswerkzeug 1 in Figur 1 weist eine Ebene 2 und einen Verformungsbereich 3 auf.

Das Verformungswerkzeug 1 weist eine Erstreckungsrichtung 4 auf, die mit der Achsrichtung (nicht dargestellt) des später zu verschweißenden Anschlussteils (nicht dargestellt) zusammenfällt.

Das Verformungswerkzeug 1 verfügt über einen ersten Bereich 5 mit einem in Erstreckungsrichtung 4 des Verformungswerkzeugs 1 konstant bleibenden symmetrischen Verformungsquerschnitt 6 und einen zweiten Bereich 7, in welchem der Verformungsquerschnitt 6 in die Ebene 2 ausläuft.

Die Ebene 2 kann in einer vorteilhaften Ausgestaltung am Ende des Verformungshubes (nicht dargestellt) mit der Folienebene (nicht dargestellt) zusammenfallen.

Der Verformungsquerschnitt 6 des Verformungswerkzeugs 1 ist wellenförmig und sinusförmig.

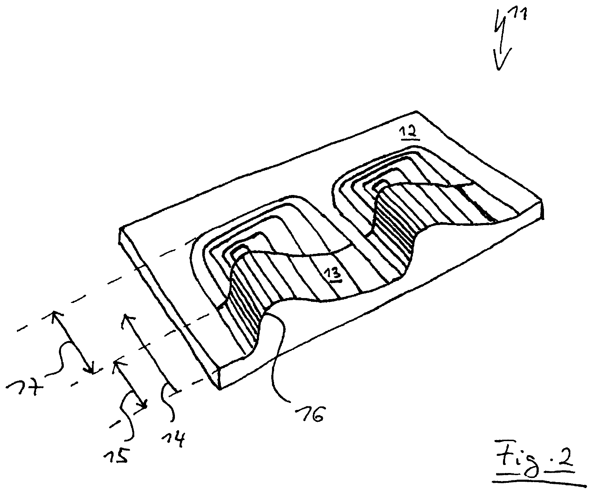

Das Verformungswerkzeug 11 in Figur 2 weist eine Ebene 12 und einen Verformungsbereich 13 auf.

Das Verformungswerkzeug 11 weist eine Erstreckungsrichtung 14 auf, die mit der Achsrichtung (nicht dargestellt) des später zu verschweißenden Anschlussteils (nicht dargestellt) zusammenfällt.

Das Verformungswerkzeug 11 verfügt über einen ersten Bereich 15 mit einem in Erstreckungsrichtung 14 des Verformungswerkzeugs 11 konstant bleibenden asymmetrischen Verformungsquerschnitt 16 und einen zweiten Bereich 17, in welchem der Verformungsquerschnitt 16 in die Ebene 12 ausläuft.

Die Ebene 12 kann in einer vorteilhaften Ausgestaltung am Ende des Verformungshubes (nicht dargestellt) mit der Folienebene (nicht dargestellt) zusammenfallen.

Der Verformungsquerschnitt 16 des Verformungswerkzeugs 11 ist wellenförmig.

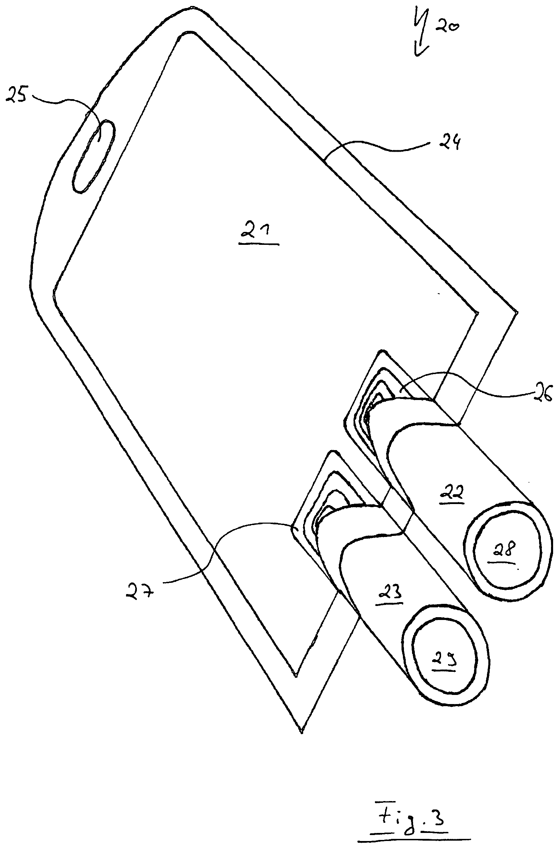

Der Beutel 20 in Figur 3 besteht im Wesentlichen aus einem Reservoir 21, einem ersten Anschlussstück 22 und einem zweiten Anschlussstück 23.

Das Reservoir 21 besteht aus einer ersten Folie (nicht gekennzeichnet), einer zweiten Folie (nicht gekennzeichnet), dem ersten Anschlussstück 22 und dem zweiten Anschlussstück 23.

Das Reservoir 21 weist eine umlaufende Schweißlinie 24 auf, welche sich auch beidseitig über das erste Anschlussstück 22 und das zweite Anschlussstück 23 erstreckt.

Das oberen Ende des Beutels 20 weist eine Ausstanzung 25 auf, welche dazu verwendet werden kann den Beutel 20 zu befestigen.

Der Beutel 20 weist im Anschluss an das erste Anschlussstück 22 und das zweite Anschlussstück 23 erstreckend zur Beutelmitte (nicht gekennzeichnet) jeweils eine Verformung 26, 27 der ersten Folie (nicht gekennzeichnet) und der zweiten Folie (nicht gekennzeichnet) gegenüber der Beutelebene (nicht gekennzeichnet) auf.

Das erste Anschlussstück 22 und das zweite Anschlussstück 23 weisen eine zylindrische Gestalt auf.

Das erste Anschlussstück 22 und das zweite Anschlussstück 23 weisen je eine Zugangsstelle 28, 29 auf, über die der Beutel 20 befüllt und/oder entleert werden kann.

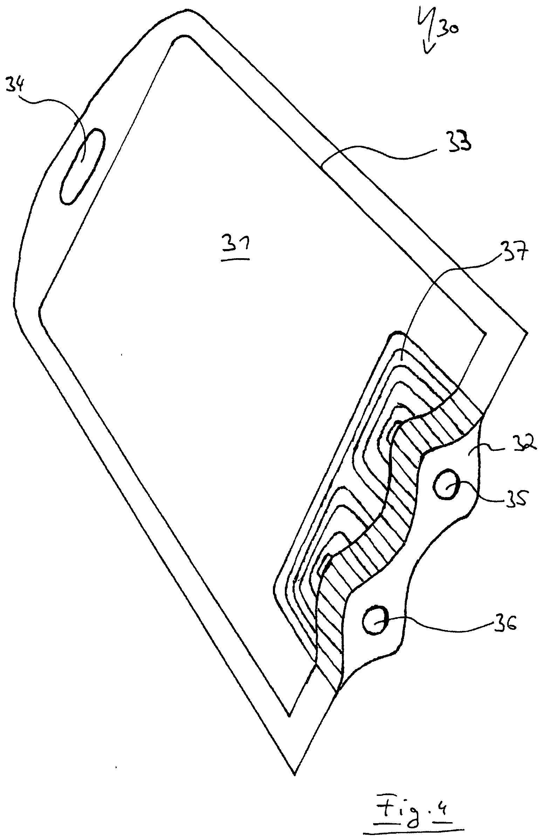

Der Beutel 30 in Figur 4 besteht im Wesentlichen aus einem Reservoir 31 und einem Anschlussstück 32.

Das Anschlussstück 32 kann in einer besonders bevorzugten Ausführungsform im Spritzgussverfahren hergestellt worden sein.

Das Reservoir 31 besteht aus einer ersten Folie (nicht gekennzeichnet), einer zweiten Folie (nicht gekennzeichnet) und dem Anschlussstück 32.

Das Reservoir 31 weist eine umlaufende Schweißlinie 33 auf, welche sich auch beidseitig über das Anschlussstück 32 erstreckt.

Das oberen Ende des Beutels 30 weist eine Ausstanzung 34 auf, welche dazu verwendet werden kann den Beutel 30 zu befestigen.

Das Anschlussstück 32 weist eine erste Zugangsstelle 35 zum Reservoir 31 des Beutels 30 und eine zweite Zugangsstelle 36 zum Reservoir 31 des Beutels 30 auf, über die der Beutel 30 befüllt und/oder entleert werden kann.

Der Beutel 30 weist im Anschluss an das Anschlussstück 32 erstreckend zur Beutelmitte (nicht gekennzeichnet) je eine Verformung 37 der ersten Folie (nicht gekennzeichnet) und der zweiten Folie (nicht gekennzeichnet) gegenüber der Beutelebene (nicht gekennzeichnet) auf.

### Liste der verwendeten Bezugszeichen

- 1: Verformungswerkzeug
- 2: Ebene
- 3: Verformungsbereich
- 4: Erstreckungsrichtung
- 5: erster Bereich
- 6: Verformungsquerschnitt
- 7: zweiter Bereich
- 11: Verformungswerkzeug
- 12: Ebene
- 13: Verformungsbereich
- 14: Erstreckungsrichtung
- 15: erster Bereich
- 16: Verformungsquerschnitt
- 17: zweiter Bereich
- 20: Beutel
- 21: Reservoir
- 22: Anschlussstück
- 23: Anschlussstück
- 24: Schweißlinie
- 25: Ausstanzung
- 26: Verformung
- 27: Verformung
- 28: Zugangsstelle
- 29: Zugangsstelle
- 30: Beutel
- 31: Reservoir
- 32: Anschlussstück
- 33: Schweißlinie
- 34: Ausstanzung
- 35: Zugangsstelle
- 36: Zugangsstelle
- 37: Verformung

## Patentansprüche

1. Vorrichtung zum Verlängern einer Folie und zum Verschweißen der Folie mit einem eine Achsrichtung aufweisenden Anschlussteil (22, 23, 32), zum Formen eines Beutels (30) für medizinische Zwecke,
mit einer Verlängerungseinrichtung zum Verlängern der Folie innerhalb und/oder außerhalb eines Verbindungsbereiches der Folie, wobei die Verlängerungseinrichtung ein Verformungswerkzeug (1, 11) mit einer Erstreckungsrichtung (4, 14) und mit einem Verformungsquerschnitt (6, 16) aufweist, der sich als eine Kontur des Verformungswerkzeugs (1, 11) im Querschnitt des Verformungswerkzeugs (1, 11) rechtwinklig zur Erstreckungsrichtung (4, 14) zeigt,
***dadurch gekennzeichnet, dass***
das Verformungswerkzeug (1, 11) einen Bereich mit einem in Erstreckungsrichtung (4, 14) auslaufenden Verformungsquerschnitt (6, 16) aufweist, dessen Kontur sich in Erstreckungsrichtung (4, 14) so ändert, dass der Grad der Verformung des Verformungswerkzeugs (1, 11) ausläuft.

2. Vorrichtung nach Anspruch 1, ***dadurch gekennzeichnet, dass*** die Verlängerungseinrichtung in einem Werkzeugdurchlauf angeordnet ist, sodass sie das Verlängern der Folie zeitlich vor dem Verschweißen bewirken kann.

3. Vorrichtung nach einem der Ansprüche 1 oder 2, ***dadurch gekennzeichnet, dass*** das Verformungswerkzeug (1, 11) dazu eingerichtet ist, in einem Bereich des Verformungswerkzeugs (1, 11) eine Wellenform in der Folie zu erzeugen.

4. Vorrichtung nach Anspruch 3, ***dadurch gekennzeichnet, dass*** das Verformungswerkzeug (1, 11) dazu eingerichtet ist, die Wellenform in einer Sinusform zu erzeugen.

5. Vorrichtung nach einem der vorstehenden Ansprüche, ***dadurch gekennzeichnet, dass*** das Verformungswerkzeug (1, 11) dazu eingerichtet ist, einen symmetrischen Verformungsquerschnitt zu erzeugen.

6. Vorrichtung nach einem der vorstehenden Ansprüche, ***dadurch gekennzeichnet, dass*** das Verformungswerkzeug (1, 11) dazu eingerichtet ist, einen asymmetrischen Verformungsquerschnitt zu erzeugen.

7. Vorrichtung nach einem der vorstehenden Ansprüche, ***dadurch gekennzeichnet, dass*** das Verformungswerkzeug (1, 11) in einem Bereich des Verformungswerkzeugs (1, 11) dazu eingerichtet ist, eine Längenreserve in der Folie zu erzeugen, welche zwischen zwei fixierten Punkten der Folie mindestens eine halbe Abwicklung des Verbindungsbereichs beträgt, insbesondere die vollständige Abwicklung des Verbindungsbereichs.

8. Vorrichtung nach einem der vorstehenden Ansprüche, ***dadurch gekennzeichnet, dass*** die Verlängerungseinrichtung eine Folienheizung aufweist.

9. Vorrichtung nach einem der vorstehenden Ansprüche, **dadurch gekennzeichnet, dass** die Verlängerungseinrichtung ein beheiztes Verformungswerkzeug (1, 11) aufweist.

10. Vorrichtung nach einem der vorstehenden Ansprüche, ***dadurch gekennzeichnet, dass*** die Verlängerungseinrichtung eine Strahlenheizung aufweist.

11. Vorrichtung nach einem der vorstehenden Ansprüche, ***dadurch gekennzeichnet, dass*** die Vorrichtung eine Transporteinrichtung für ein Endlosfolienband und/oder einen Drehtisch aufweist.

12. Vorrichtung nach einem der vorstehenden Ansprüche, ***dadurch gekennzeichnet, dass*** die Verlängerungseinrichtung und eine Schweißeinrichtung an einer Station angeordnet sind.

13. Vorrichtung nach einem der vorstehenden Ansprüche, ***dadurch gekennzeichnet, dass*** die Verlängerungseinrichtung und die Schweißeinrichtung an einem kombinierten Werkzeug angeordnet sind.

14. Vorrichtung nach einem der Ansprüche 1 bis 11 oder 13, ***dadurch gekennzeichnet, dass*** die Verlängerungseinrichtung und die Schweißeinrichtung an separaten Stationen angeordnet sind.

15. Vorrichtung nach einem der vorstehenden Ansprüche, ***dadurch gekennzeichnet, dass*** die Verlängerungseinrichtung so angeordnet ist, dass sie ein Verlängern der Folie zwischen zwei Verbindungsbereichen bewirkt.

16. Verfahren zum Verschweißen eines Verbindungsbereichs einer Folie mit einem eine Achsrichtung aufweisenden Anschlussteil (22, 23, 32) mit einer Vorrichtung nach einem der vorstehenden Ansprüche, wobei die Folie zunächst verlängert wird und anschließend der Verbindungsbereich mit einem eine Achsrichtung aufweisenden Anschlussteil (22, 23, 32) verschweißt wird.

17. Herstellverfahren für Beutel (30) zur Nutzung für medizinische Zwecke mittels Verschweißen von zwei Folien mit einem eine Achsrichtung aufweisenden Anschlussteil (22, 23, 32) zu einem Beutel (30), wobei das eine Achsrichtung aufweisende Anschlussteil (22, 23, 32) in einem Verbindungsbereich zwischen die Folien verschweißt wird, wobei das Verfahren durch folgende Schritte gekennzeichnet ist:
(a) Verformen einer ersten Folie mit einem Verformungswerkzeug (1, 11) innerhalb und/oder außerhalb des Verbindungsbereichs, insbesondere mit einer Vorrichtung nach einem der Ansprüche 1 bis 15, wobei das Verformungswerkzeug (1, 11) einen ersten Verformungsquerschnitt (6, 16) aufweist,
(b) Verformen einer zweiten Folie mit einem Verformungswerkzeug (1, 11) innerhalb und/oder außerhalb des Verbindungsbereichs, insbesondere mit einer Vorrichtung nach einem der Ansprüche 1 bis 15, wobei das Verformungswerkzeug (1, 11) einen zweiten Verformungsquerschnitt (6, 16) aufweist, und
(c) Verschweißen der ersten Folie, der zweiten Folie und des eine Achsrichtung aufweisenden Anschlussteils (22, 23, 32) zu einem Beutel (30),
**dadurch gekennzeichnet, dass** der zweite Verformungsquerschnitt (6, 16) von dem ersten Verformungsquerschnitt (6, 16) abweicht, womit ein abweichendes Materialverhalten zwischen den zwei Folien und/oder eine asymmetrische Gestaltung des Anschlussteils (22, 23, 32) durch die abweichenden Verformungsquerschnitte (6, 16) kompensiert wird.

18. Herstellverfahren für Beutel (30) zur Nutzung für medizinische Zwecke unter Verwendung einer Vorrichtung nach einem der Ansprüche 1 bis 15, zum Reduzieren einer Quereinschnürung des Beutels (30) in gefülltem Zustand.

19. Anlage zum Produzieren von Beuteln (30) aus zwei Folien mit einem zwischen den Folien eingeschweißten eine Achsrichtung aufweisenden Anschlussteil (22, 23, 32), ***dadurch gekennzeichnet, dass*** die Anlage eine Vorrichtung nach einem der Ansprüche 1 bis 15 aufweist und/oder ein Verfahren nach Anspruch 16 und/oder ein Herstellverfahren nach einem der Ansprüche 17 oder 18 durchführt.

## Claims

1. Device for extending a film and for welding the film to a connection part (22, 23, 32) having an axial direction for forming a pouch (30) for medical purposes,
having an elongation device for elongating the film inside and/or outside a connecting area of the film, the elongation device having a molding tool (1, 11) with an extension direction (4, 14) and a molding cross-section (6, 16) which is shown as a contour of the molding tool (1, 11) in the cross-section of the molding tool (1, 11) perpendicularly to the extension direction (4, 14),
***characterized in that***
the molding tool (1, 11) has an area with a molding cross-section (6, 16) which tapers off in the extension direction (4, 14), the contour of the molding cross-section changing in the extension direction (4, 14) such that the degree of molding of the molding tool (1, 11) tapers off.

2. Device according to Claim 1, **characterized *in that*** the elongation device is arranged in a tool passage such that it can cause the elongation of the film at a point in time before welding.

3. Device according to one of Claims 1 or 2, ***characterized in that*** the molding tool (1, 11) is adapted to create a wave form in the film in one portion of the molding tool (1, 11).

4. Device according to Claim 3, **characterized *in that*** the molding tool (1, 11) is adapted to create the wave form in a sinusoidal shape.

5. Device according to one of the above Claims, ***characterized in that*** the molding tool (1, 11) is adapted to create a symmetrical molding cross-section.

6. Device according to one of the above Claims, ***characterized in that*** the molding tool (1, 11) is adapted to create an asymmetrical molding cross-section.

7. Device according to one of the above Claims, ***characterized in that*** the molding tool (1, 11) is adapted to create, in one portion of the molding tool (1, 11), a reserve length in the film which amounts to at least half an unwinding, in particular one entire unwinding, of the connecting area between two fixed points of the film.

8. Device according to one of the above Claims, ***characterized in that*** the elongation device has a film heating unit.

9. Device according to one of the above Claims, ***characterized in that*** the elongation device has a heated molding tool (1, 11).

10. Device according to one of the above Claims, ***characterized in that*** the elongation device has a radiation heater.

11. Device according to one of the above Claims, ***characterized in that*** the device has a transport unit for an endless film tape and/or a turntable.

12. Device according to one of the above Claims, ***characterized in that*** the elongation device and a welding unit are arranged at one station.

13. Device according to one of the above Claims, ***characterized in that*** the elongation device and the welding unit are arranged at a combined tool.

14. Device according to one of Claims 1 through 11 or 13, ***characterized in that*** the elongation device and the welding unit are arranged at separate stations.

15. Device according to one of the above Claims, ***characterized in that*** the elongation device is arranged so as to cause an elongation of the film between two connecting areas.

16. Method of welding a connecting area of a film to a connecting part (22, 23, 32) having an axial direction by means of a device according to one of the above Claims, the film being elongated first and then the connecting area being welded to a connecting part (22, 23, 32) having an axial direction.

17. Manufacturing method for pouches (30) for medical purposes by means of welding two films to a connecting part (22, 23, 32) having an axial direction to form a pouch (30), the connecting part (22, 23, 32) having an axial direction being welded in a connecting area between the films, the method being **characterized by** the following steps:
(a) molding a first film by means of a molding tool (1, 11) inside and/or outside the connecting area, in particular by means of a device according to one of Claims 1 through 15, the molding tool (1, 11) having a first molding cross-section (6, 16),
(b) molding a second film by means of a molding tool (1, 11) inside and/or outside the connecting area, in particular by means of a device according to one of Claims 1 through 15, the molding tool (1, 11) having a second molding cross-section (6, 16), and
(c) welding the first film, the second film and the connecting part (22, 23, 32) having an axial direction together to form a pouch (30),
**characterized in that**
the second molding cross-section (6, 16) differs from the first molding cross-section (6, 16), the different molding cross-sections (6, 16) compensating for different material performances of the two films and/or for an asymmetrical shape of the connecting part (22, 23, 32).

18. Manufacturing method for pouches (30) for medical purposes using a device according to one of Claims 1 through 15, for reducing a transverse constriction of the pouch (30) in the filled state.

19. Plant for manufacturing pouches (30) from two films with a connecting part (22, 23, 32) having an axial direction and being welded between the films, ***characterized in that*** the plant contains a device according to one of Claims 1 through 15 and/or performs a method according to Claim 16 and/or a manufacturing method according to one of Claims 17 or 18.

## Revendications

1. Dispositif pour allonger un film et pour souder le film à un élément de raccordement (22, 23, 32) présentant une direction axiale, pour la formation d'un sac (30) à usage médical, comprenant un dispositif d'allongement pour l'allongement du film dans une région de jonction du film et/ou à l'extérieur de celle-ci, le dispositif d'allongement présentant un outil de déformation (1, 11) avec une direction d'extension (4, 14) et avec une section transversale de déformation (6, 16), laquelle se présente comme un contour de l'outil de déformation (1, 11) dans la section transversale de l'outil de déformation (1, 11) perpendiculairement à la direction d'extension (4, 14),
**caractérisé en ce que**
l'outil de déformation (1, 11) présente une région avec une section transversale de déformation (6, 16) se terminant dans la direction d'extension (4, 14), dont le contour se modifie de telle façon dans la direction d'extension (4, 14), que le degré de déformation de l'outil de déformation (1, 11) se termine.

2. Dispositif selon la revendication 1, **caractérisé en ce que** le dispositif d'allongement est disposé dans un passage d'outil, de sorte qu'il peut provoquer l'allongement du film avant le soudage.

3. Dispositif selon l'une des revendications 1 et 2, **caractérisé en ce que** l'outil de déformation (1, 11) est conçu pour produire une forme ondulée dans le film dans la région de l'outil de déformation (1, 11).

4. Dispositif selon la revendication 3, **caractérisé en ce que** l'outil de déformation (1, 11) est conçu pour produire la forme ondulée comme une forme sinusoïdale.

5. Dispositif selon l'une des revendications précédentes, **caractérisé en ce que** l'outil de déformation (1, 11) est conçu pour produire une section transversale de déformation symétrique.

6. Dispositif selon l'une des revendications précédentes, **caractérisé en ce que** l'outil de déformation (1, 11) est conçu pour produire une section transversale de déformation asymétrique.

7. Dispositif selon l'une des revendications précédentes, **caractérisé en ce que** dans une région de l'outil de déformation (1, 11), l'outil de déformation (1, 11) est conçu pour produire une réserve de longueur dans le film, laquelle se monte au moins à la moitié d'un déroulement de la région de jonction entre deux points fixes du film, en particulier à un déroulement complet de la région de jonction.

8. Dispositif selon l'une des revendications précédentes, **caractérisé en ce que** le dispositif d'allongement présente un chauffage de film.

9. Dispositif selon l'une des revendications précédentes, **caractérisé en ce que** le dispositif d'allongement présente un outil de déformation (1, 11) chauffé.

10. Dispositif selon l'une des revendications précédentes, **caractérisé en ce que** le dispositif d'allongement présente un chauffage rayonnant.

11. Dispositif selon l'une des revendications précédentes, **caractérisé en ce que** le dispositif présente un dispositif de transport pour une bande de film continue et/ou une table rotative.

12. Dispositif selon l'une des revendications précédentes, **caractérisé en ce que** le dispositif d'allongement et dispositif de soudage sont disposés sur une station.

13. Dispositif selon l'une des revendications précédentes, **caractérisé en ce que** le dispositif d'allongement et le dispositif de soudage sont disposés sur un outil combiné.

14. Dispositif selon l'une des revendications 1 à 11 ou 13, **caractérisé en ce que** le dispositif d'allongement et le dispositif de soudage sont disposés sur des stations séparées.

15. Dispositif selon l'une des revendications précédentes, **caractérisé en ce que** le dispositif d'allongement est disposé de manière à produire un allongement du film entre deux régions de jonction.

16. Procédé de soudage d'une région de jonction d'un film avec un élément de raccordement (22, 23, 32) présentant une direction axiale, avec un dispositif selon l'une des revendications précédentes, dans lequel le film est tout d'abord allongé et la région de jonction est ensuite soudée avec un élément de raccordement (22, 23, 32) présentant une direction axiale.

17. Procédé de fabrication pour des sacs (30) à usage médical par soudage de deux films avec un élément de raccordement (22, 23, 32) présentant une direction axiale de manière à former un sac (30), dans lequel l'élément de raccordement (22, 23, 32) présentant une direction axiale est soudé dans une région de jonction entre les films, le procédé étant **caractérisé par** les étapes suivantes:
(a) déformation d'un premier film à l'aide d'un outil de déformation (1, 11) dans la région de jonction et/ou à l'extérieur de celle-ci, en particulier à l'aide d'un dispositif selon l'une des revendications 1 à 15, l'outil de déformation (1, 11) présentant une première section transversale de déformation (6, 16),
(b) déformation d'un deuxième film à l'aide d'un outil de déformation (1, 11) dans la région de jonction et/ou à l'extérieur de celle-ci, en particulier à l'aide d'un dispositif selon l'une des revendications 1 à 15, l'outil de déformation (1, 11) présentant une deuxième section transversale de déformation (6, 16), et
(c) soudage du premier film, du deuxième film et de l'élément de raccordement (22, 23, 32) présentant une direction axiale, de manière à former un sac (30),
**caractérisé en ce que**
la deuxième section transversale de déformation (6, 16) est différente de la première section transversale de déformation (6, 16), moyennant quoi un comportement de matériau différent entre les deux films et/ou une conception asymétrique de l'élément de raccordement (22, 23, 32) est/sont compensés par la différence des sections transversales de déformation (6, 16).

18. Procédé de fabrication pour un sac (30) à usage médical à l'aide d'un dispositif selon l'une des revendications 1 à 15, permettant de réduire un resserrement transversal du sac (30) à l'état rempli.

19. Installation pour la production de sacs (30) à partir de deux films avec un élément de raccordement (22, 23, 32) présentant une direction axiale, lequel est soudé entre les films, **caractérisée en ce que** l'installation présente un dispositif selon l'une des revendications 1 à 15 et/ou met en œuvre un procédé selon la revendication 16 et/ou un procédé de fabrication selon l'une des revendications 17 et 18.
